# EUROPÄISCHE PATENTSCHRIFT

(11) **EP 2 635 616 B1**
(45) Veröffentlichungstag und Bekanntmachung des Hinweises auf die Patenterteilung: **02.08.2017**
(21) Anmeldenummer: 11779144.2
(22) Anmeldetag: 27.10.2011
(51) Int. Cl.: C08G 18/76, C08G 18/09, C08G 18/20, C08G 101/00, C08G 18/32

(54) **VERFAHREN ZUR HERSTELLUNG VON AEROGELEN ODER XEROGELEN**
PROCESS FOR PRODUCING AEROGELS OR XEROGELS
PROCÉDÉ DE PRÉPARATION D'AÉROGELS ET DE XÉROGELS

(30) Priorität: 04.11.2010 EP 10189932
(43) Veröffentlichungstag der Anmeldung: 11.09.2013
(73) Patentinhaber: BASF SE, 67056 Ludwigshafen am Rhein (DE)
(72) Erfinder: FRICKE, Marc, 49090 Osnabrück (DE); ELBING, Mark, 28215 Bremen (DE)
(74) Vertreter: BASF IP Association
(86) Internationale Anmeldenummer: PCT/EP2011/068811
(87) Internationale Veröffentlichungsnummer: WO 2012/059388

(56) Entgegenhaltungen:
- EP-A1- 2 399 945
- EP-A2- 0 026 915
- WO-A1-89/06251
- WO-A1-2008/138978
- WO-A1-2009/027310
- WO-A2-2011/069959

## Beschreibung

Die vorliegende Erfindung betrifft ein Verfahren zur Herstellung von porösen Materialien in Form von Aerogelen oder Xerogelen umfassend die Umsetzung mindestens eines mehrfunktionellen Isocyanates mit einer Aminkomponente, welche mindestens ein mehrfunktionelles substituiertes aromatisches Amin umfasst, in Gegenwart eines Lösungsmittels und eines Katalysators, wobei die Umsetzung in Abwesenheit von Wasser durchgeführt wird.

Poröse Materialien, beispielsweise Polymerschäume, mit Poren im Größenbereich von wenigen Mikrometern oder deutlich darunter und einer hohen Porosität von mindestens 70 % sind aufgrund theoretischer Überlegungen besonders gute Wärmeisolatoren.
Solche porösen Materialien mit kleinem mittlerem Porendurchmesser können beispielsweise als organische Xerogele vorliegen. In der Literatur wird der Begriff Xerogel nicht durchweg einheitlich verwendet. Im Allgemeinen wird unter einem Xerogel ein poröses Material verstanden, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde. Im Gegensatz hierzu spricht man im Allgemeinen von Aerogelen, wenn die Entfernung der flüssigen Phase aus dem Gel unter überkritischen Bedingungen durchgeführt wurde.
Beim Sol-Gel-Verfahren wird zunächst ein Sol auf Basis einer reaktiven organischen Gelvorstufe hergestellt und danach das Sol durch eine vernetzende Reaktion zu einem Gel geliert. Um aus dem Gel ein poröses Material, beispielsweise ein Xerogel, zu erhalten, muss die Flüssigkeit entfernt werden. Dieser Schritt wird nachfolgend vereinfachend als Trocknung bezeichnet.

Die WO-95/02009 offenbart Isocyanat-basierte Xerogele, die insbesondere für Anwendungen im Bereich der Vakuumisolation geeignet sind. Die Publikationsschrift offenbart zudem ein Sol-Gel-basiertes Verfahren zur Herstellung der Xerogele, wobei bekannte, unter anderem aromatische Polyisocyanate sowie ein unreaktives Lösungsmittel zum Einsatz kommen. Als weitere Verbindungen mit aktiven H-Atomen werden aliphatische oder aromatische Polyamine oder Polyole eingesetzt. Die in der Publikationsschrift offenbarten Beispiele umfassen solche, in denen ein Polyisocyanat mit Diaminodiethyltoluol umgesetzt wird. Die offenbarten Xerogele weisen generell mittlere Porengrößen im Bereich von 50 µm auf. In einem Beispiel wird ein mittlerer Porendurchmesser von 10 µm genannt.

Aus der WO-2008/138978 sind Xerogele enthaltend von 30 bis 90 Gew.-% mindestens eines mehrfunktionellen Isocyanats und von 10 bis 70 Gew.-% mindestens eines mehrfunktionellen aromatischen Amins bekannt, deren volumengewichteter mittlerer Porendurchmesser höchstens 5 Mikrometer beträgt.

Die WO-2011/069959 beschreibt poröse Materialien auf Basis von mehrfunktionellen Isocyanaten und mehrfunktionellen aromatischen Aminen, wobei die Aminkomponente mehrfunktionelle substituierte aromatische Amine umfasst. Die Herstellung der genannten porösen Materialien erfolgt durch Umsetzung von Isocyanaten mit der gewünschten Menge Amin in einem Lösungsmittel, das gegenüber den Isocyanaten nicht reaktiv ist. Die Bildung der Harnstoff-Verknüpfungen erfolgt dabei ausschließlich durch Reaktion der Isocyanatgruppen mit den eingesetzten Aminogruppen. Die Reaktion verläuft unkatalysiert.

In EP 2 399 945 A1 wird ein Verfahren zur Herstellung eines porösen Materials beschrieben, bei dem ein mehrfunktionelles Isocyanat und ein mehrfunktionelles aromatisches Amin in Gegenwart von Wasser und einem Lösungsmittel sowie gegebenenfalls eines Katalysators umgesetzt werden. Durch den Einsatz von Wasser reagiert ein Teil des mehrfunktionellen Isocyanats in situ unter Freisetzung von CO₂ zu einem mehrfunktionellen Amin als Zwischenprodukt.

Die Materialeigenschaften, insbesondere die mechanische Stabilität und/oder die Druckfestigkeit sowie die Wärmeleitfähigkeit, der bekannten porösen Materialien auf Basis von Polyharnstoff sind jedoch nicht für alle Anwendungen ausreichend. Zudem zeigen die zugrundeliegenden Formulierungen bei der Trocknung eine Schrumpfung unter Verringerung der Porosität und Erhöhung der Dichte. Darüber hinaus ist die Gelierungszeit, d. h. die zur Gelierung der Ausgangsverbindungen erforderliche Zeit, oft zu lang. Außerdem ist die mittlere Porengröße der bekannten porösen Materialien mit geringer Dichte oftmals zu hoch. Insbesondere bei Drücken oberhalb des Vakuumbereiches, z. B. im Bereich von 1 bis 1000 mbar, ist eine kleiner mittlere Porengröße hinsichtlich einer günstigen Wärmeleitfähigkeit von Vorteil.

Ein besonderes Problem bei den aus dem Stand der Technik bekannten Formulierungen auf Basis von Isocyanaten und Aminen sind sogenannte Mischfehler. Mischfehler treten infolge der hohen Reaktionsgeschwindigkeit zwischen Isocyanaten und Aminogruppen auf, da vor einer vollständigen Durchmischung die Gelierungsreaktion bereits weit fortgeschritten ist. Mischfehler führen zu Aerogelen oder Xerogelen mit heterogenen und unzureichenden Materialeigenschaften. Ein Konzept zur Verringerung des Phänomens der Mischfehler ist somit allgemein wünschenswert. Eine zu lange Gelzeit, d. h. eine zu lange Zeit bis zur vollständigen Gelierung der Gelvorstufe, sollte allerdings vermieden werden.

Es bestand daher die Aufgabe, die vorgenannten Nachteile zu vermeiden. Insbesondere sollte ein Verfahren zur Herstellung eines Aerogels oder Xerogels zur Verfügung gestellt werden, das die vorgenannten Nachteile nicht oder in geringerem Maße aufweist. Die damit hergestellten porösen Materialien in Form von Aerogelen oder Xerogelen sollten eine im Vergleich zum Stand der Technik verbesserte Wärmeleitfähigkeit im Vakuum aufweisen. Darüber hinaus sollten die Aerogele und Xerogele auch bei Drücken oberhalb des Vakuumbereiches, insbesondere in einem Druckbereich von ungefähr 1 mbar bis ungefähr 100 mbar eine geringe thermische Leitfähigkeit aufweisen. Dies ist wünschenswert, da in Vakuumpaneelen im Laufe der Zeit eine Druckzunahme erfolgt. Eine weitere Aufgabe der vorliegenden Erfindung war es, ein poröses Material mit einer geringen Wärmeleitfähigkeit im belüfteten Zustand, d. h. im Bereich von 1000 mbar, bereitzustellen. Weiterhin sollte das Aerogel oder Xerogel gleichzeitig eine hohe Porosität, eine geringe Dichte und eine ausreichend hohe mechanische Stabilität aufweisen.

Schließlich sollten Mischfehler und somit die Heterogenitäten in der Materialstruktur und den Materialeigenschaften in den porösen Materialien, welche bei der Umsetzung der Isocyanate mit den Aminen entstehen, vermieden werden.

Demgemäß wurde das erfindungsgemäße Verfahren und die so erhältlichen Aerogele und Xerogele gefunden.

Das erfindungsgemäße Verfahren zur Herstellung eines Aerogels oder Xerogels umfasst die Umsetzung der folgenden Komponenten (a1) und (a2) in Abwesenheit von Wasser, in Gegenwart eines Lösungsmittels und mindestens eines Katalysators:
(a1) mindestens ein mehrfunktionelles Isocyanat,
(a2) mindestens ein mehrfunktionelles substituiertes aromatisches Amin (a2-s) gemäß der allgemeinen Formel I 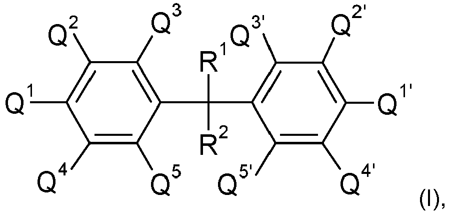 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
   - die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist und
   - Q², Q⁴, Q^{2'} und Q^{4'} so gewählt werden, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist,
optional mindestens ein weiteres mehrfunktionelles aromatisches Amin (a2-u), welches sich von den Aminen (a2-s) gemäß der allgemeinen Formel I unterscheidet, unter Bildung der erfindungsgemäßen Aerogele oder Xerogele.

Bevorzugte Ausführungsformen sind den Ansprüchen und der Beschreibung zu entnehmen. Kombinationen bevorzugter Ausführungsformen verlassen den Rahmen dieser Erfindung nicht. Nachfolgend werden bevorzugte Ausführungsformen der eingesetzten Komponenten erläutert.

Die mehrfunktionellen Isocyanate (a1) werden im Folgenden gemeinsam als Komponente (a1) bezeichnet. Entsprechend werden die mehrfunktionellen Amine (a2) im Folgenden gemeinsam als Komponente (a2) bezeichnet. Es ist für den Fachmann offensichtlich, dass die genannten Monomerkomponenten im porösen Material in umgesetzter Form vorliegen.

Unter Funktionalität einer Verbindung soll im Rahmen der vorliegenden Erfindung die Zahl der reaktiven Gruppen pro Molekül verstanden werden. Im Fall der Monomerkomponente (a1) ist die Funktionalität die Anzahl der Isocyanatgruppen pro Molekül. Im Falle der Aminogruppen der Monomerkomponente (a2) bezeichnet die Funktionalität die Zahl der reaktiven Aminogruppen pro Molekül. Eine mehrfunktionelle Verbindung weist dabei eine Funktionalität von mindestens 2 auf.

Falls als Komponente (a1) beziehungsweise (a2) Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen. Eine mehrfunktionelle Verbindung enthält mindestens zwei der oben genannten funktionellen Gruppen pro Molekül.

Erfindungsgemäß verläuft die Reaktion in Abwesenheit von Wasser. Dem Fachmann ist bewusst, dass Spuren von Wasser im Lösungsmittel nicht vollständig ausgeschlossen werden können. Geringe Mengen von Wasser beeinflussen die vorliegende Erfindung nicht. Unter Abwesenheit von Wasser ist dementsprechend zu verstehen, dass die Gesamtmenge von Wasser bezogen auf das Gesamtgewicht der Komponenten (a1) und (a2) sowie Wasser unterhalb 0,1 Gew.-% beträgt, insbesondere von 0 bis 0,09 Gew.-%, besonders bevorzugt von 0 bis 0,08 Gew.-%.

### Komponente (a1)

Im erfindungsgemäßen Verfahren wird als Komponente (a1) mindestens ein mehrfunktionelles Isocyanat umgesetzt.

Im Rahmen des erfindungsgemäßen Verfahrens beträgt die eingesetzte Menge der Komponente (a1) vorzugsweise von 20 bis 80 Gew.-%, insbesondere von 25 bis 75 Gew.-%, besonders bevorzugt von 35 bis 68 Gew.-%, jeweils bezogen auf das Gesamtgewicht der Komponenten (a1) und (a2), welches 100 Gew.-% ergibt.

Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a1) in diesem Fall verschiedene mehrfunktionelle Isocyanate enthält. Als Monomerbausteine (a1) in Betracht kommende mehrfunktionelle Isocyanate weisen zwei (im folgenden Diisocyanate genannt) oder mehr als zwei Isocyanatgruppen pro Molekül der Monomerkomponente auf.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Als mehrfunktionelle Isocyanate (a1) sind aromatische Isocyanate bevorzugt. Besonders bevorzugt sind als mehrfunktionelle Isocyanate der Komponente (a1) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als mehrfunktionelles Isocyanat besonders bevorzugt ist oligomeres Diphenylmethandiisocyanat. Bei oligomerem Diphenylmethandiisocyanat (im folgenden oligomeres MDI genannt) handelt es sich um ein oder ein Gemisch aus mehreren oligomeren Kondensationsprodukten und somit Derivaten von Diphenylmethandiisocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenisocyanat oder auch als polymeres MDI bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität eines Isocyanates, welches oligomeres MDI enthält, kann im Bereich von ungefähr 2,2 bis ungefähr 5 variieren, insbesondere von 2,4 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das bei der Herstellung von MDI anfällt.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente (a1) mindestens zwei, insbesondere mindestens 2,2 und besonders bevorzugt mindestens 2,5. Die Funktionalität der Komponente (a1) beträgt bevorzugt von 2,2 bis 4 und besonders bevorzugt von 2,5 bis 3.

Vorzugsweise beträgt der Gehalt an Isocyanatgruppen der Komponente (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer bevorzugten Ausführungsform besteht die Komponente (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,5 auf.

Die Viskosität der eingesetzten Komponente (a1) kann in einem weiten Bereich variieren. Vorzugsweise weist die Komponente (a1) eine Viskosität von 100 bis 3000 mPa.s, besonders bevorzugt von 200 bis 2500 mPa.s, auf.

### Komponente (a2)

Erfindungsgemäß wird im Rahmen von Komponente (a2) mindestens ein mehrfunktionelles substituiertes aromatisches Amin (a2-s) gemäß der allgemeinen Formel I 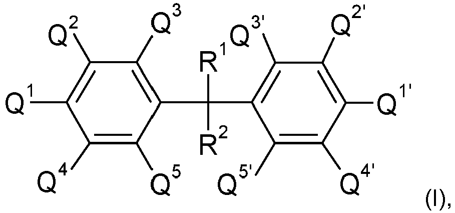 wobei R¹ und R² gleich oder unterschiedlich sein können und unabhängig voneinander ausgewählt werden aus Wasserstoff und linearen oder verzweigten Alkylgruppen mit 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit 1 bis 12 Kohlenstoffatomen, wobei die Alkylgruppe weitere funktionelle Gruppen tragen kann, unter der Voraussetzung, dass
- die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist und
- Q², Q⁴, Q^{2'} und Q^{4'} so gewählt werden, dass die Verbindung gemäß der allgemeinen Formel I mindestens eine lineare oder verzweigte Alkylgruppe, die optional weitere funktionelle Gruppen tragen kann, mit von 1 bis 12 Kohlenstoffatomen in α-Position zu mindestens einer an den aromatischen Kern gebundenen primären Aminogruppe aufweist, und
optional mindestens ein weiteres mehrfunktionelles aromatisches Amin (a2-u), welches sich von den Aminen (a2-s) gemäß der allgemeinen Formel I unterscheidet, umgesetzt.

Komponente (a2) besteht somit aus mehrfunktionellen aromatischen Aminen, wobei die mehrfunktionellen aromatischen Amine (a2-s) gemäß der allgemeinen Formel I ein Bestandteil sind.

Unter mehrfunktionellen Aminen sind solche zu verstehen, welche mindestens zwei gegenüber Isocyanaten reaktive Aminogruppen pro Molekül aufweisen. Gegenüber Isocyanaten reaktiv sind dabei primäre und sekundäre Aminogruppen, wobei die Reaktivität der primären Aminogruppen im Allgemeinen deutlich höher ist als die der sekundären.

Vorzugsweise beträgt die eingesetzte Menge der Komponente (a2) von 20 bis 80 Gew.-%, insbesondere von 25 bis 75 Gew.-%, besonders bevorzugt von 32 bis 65 Gew.-%, jeweils bezogen auf das Gesamtgewicht der Komponenten (a1) und (a2), welches 100 Gew.-% ergibt.

Erfindungsgemäß sind R¹ und R² im Rahmen der allgemeinen Formel I gleich oder unterschiedlich und werden unabhängig voneinander ausgewählt aus Wasserstoff, einer primären Aminogruppe und einer linearen oder verzweigten Alkylgruppe mit von 1 bis 6 Kohlenstoffatomen. Vorzugsweise werden R¹ und R² ausgewählt aus Wasserstoff und Methyl. Besonders bevorzugt gilt R¹ = R² = H.

Vorzugsweise werden Q², Q⁴, Q^{2'} und Q^{4'} so gewählt, dass das substituierte aromatische Amin (a2-s) mindestens zwei primäre Aminogruppen umfasst, die jeweils eine oder zwei lineare oder verzweigte Alkylgruppen mit von 1 bis 12 Kohlenstoffatomen in α-Position aufweisen, die weitere funktionelle Gruppen tragen können. Sofern eines oder mehrere aus Q², Q⁴, Q^{2'} und Q^{4'} so gewählt werden, dass sie lineare oder verzweigte Alkylgruppen mit von 1 bis 12 Kohlenstoffatomen entsprechen, die weitere funktionelle Gruppen tragen, dann sind Aminogrupppen und/oder Hydroxygruppen und/oder Halogenatome als solche funktionelle Gruppen bevorzugt.

Vorzugsweise werden die Alkylgruppen im Rahmen der Substituenten Q gemäß der allgemeinen Formel I ausgewählt aus Methyl, Ethyl, n-Propyl, iso-Propyl, n-Butyl, sek-Butyl und tert-Butyl.

Vorzugsweise werden die Amine (a2-s) ausgewählt aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, die weitere funktionelle Gruppen tragen können. Vorzugsweise sind vorgenannte Alkylgruppen Methyl, Ethyl, n-Propyl, i-Propyl, n-Butyl, sek-Butyl oder t-Butyl (jeweils unsubstituiert).

In einer Ausführungsform können eines, mehrere oder alle Wasserstoffatome einer oder mehrerer Alkylgruppen der Substituenten Q durch Halogenatome, insbesondere Chlor, ersetzt sein. Alternativ können eines, mehrere oder alle Wasserstoffatome einer oder mehrerer Alkylgruppen der Substituenten Q durch NH₂ oder OH ersetzt sein. Es ist jedoch bevorzugt, wenn die Alkylgruppen im Rahmen der allgemeinen Formel I aus Kohlenstoff und Wasserstoff aufgebaut sind.

In einer besonders bevorzugten Ausführungsform umfasst Komponente (a2) 3,3',5,5'-Tetraalkyl-4,4'-diaminodiphenylmethan, wobei die Alkylgruppen gleich oder unterschiedlich sein können und unabhängig ausgewählt werden aus linearen oder verzweigten Alkylgruppen mit von 1 bis 12 Kohlenstoffatomen, die optional funktionelle Gruppen tragen können. Vorzugsweise werden vorgenannte Alkylgruppen ausgewählt aus unsubstituierten Alkylgruppen, insbesondere Methyl, Ethyl, n-Propyl, iso-Propyl, n-Butyl, sek-Butyl und tert-Butyl, besonders bevorzugt aus Methyl und Ethyl. Ganz besonders bevorzugt sind 3,3'-5,5'-Tetraethyl-4,4'-diaminodiphenylmethan und/oder 3,3'-5,5'-Tetramethyl-4,4'-diaminodiphenylmethan.

Die vorgenannten mehrfunktionellen Amine des Typs (a2-s) sind dem Fachmann an sich bekannt oder können nach bekannten Methoden hergestellt werden. Eine der bekannten Methoden ist die Umsetzung von Anilin beziehungsweise von Derivaten des Anilins mit Formaldehyd unter saurer Katalyse, insbesondere die Umsetzung von 2,4- oder 2,6-Dialkylanilin.

Optional kann die Komponente (a2) auch weitere mehrfunktionelle aromatische Amine (a2-u) umfassen, welche sich von den Aminen der Struktur (a2-s) unterscheiden. Die aromatischen Amine (a2-u) weisen vorzugsweise ausschließlich aromatisch gebundene Aminogruppen auf, können jedoch auch sowohl (cyclo)aliphatisch als auch aromatisch gebundene reaktive Aminogruppen aufweisen.

Geeignete mehrfunktionelle aromatische Amine (a2-u) sind insbesondere Isomere und Derivate von Diaminodiphenylmethan. Im Rahmen von Komponente (a2) bevorzugte Isomere und Derivate von Diaminodiphenylmethan sind insbesondere 4,4'-Diaminodiphenylmethan, 2,4'-Diaminodiphenylmethan, 2,2'-Diaminodiphenylmethan und oligomeres Diaminodiphenylmethan.

Geeignete mehrfunktionelle aromatische Amine (a2-u) sind außerdem insbesondere Isomere und Derivate von Toluoldiamin. Im Rahmen von Komponente (a2) bevorzugte Isomere und Derivate von Toluoldiamin sind insbesondere Toluol-2,4-diamin und/oder Toluol-2,6-diamin und Diethyltoluoldiamine, insbesondere 3,5-Diethyltoluol-2,4-diamin und/oder 3,5-Diethyltoluol-2,6-diamin.

In einer ersten, besonders bevorzugten Ausführungsform besteht Komponente (a2) ausschließlich aus mehrfunktionellen aromatischen Aminen des Typs (a2-s). In einer zweiten bevorzugten Ausführungsform besteht Komponente (a2) aus mehrfunktionellen aromatischen Aminen der Typen (a2-s) und (a2-u). Im Rahmen der letztgenannten, zweiten bevorzugten Ausführungsform enthält die Komponente (a2) vorzugsweise mindestens ein mehrfunktionelles aromatisches Amin (a2-u), wovon mindestens eines ausgewählt ist aus Isomeren und Derivaten von Diaminodiphenylmethan (MDA).

Besonders bevorzugt umfasst Komponente (a2) im Rahmen der zweiten bevorzugten Ausführungsform entsprechend mindestens ein mehrfunktionelles aromatisches Amin (a2-u) ausgewählt aus 4,4'-Diaminodiphenylmethan, 2,4'-Diaminodiphenylmethan, 2,2'-Diaminodiphenylmethan und oligomerem Diaminodiphenylmethan.

Oligomeres Diaminodiphenylmethan enthält ein oder mehrere mehrkernige Methylenverbrückte Kondensationsprodukte von Anilin und Formaldehyd. Oligomeres MDA enthält mindestens ein, im Allgemeinen jedoch mehrere Oligomere des MDA mit einer Funktionalität von mehr als 2, insbesondere 3 oder 4 oder 5. Oligomeres M DA ist bekannt oder kann nach an sich bekannten Methoden hergestellt werden. Üblicherweise wird oligomeres MDA in Form von Mischungen mit monomerem MDA eingesetzt.

Die (mittlere) Funktionalität eines mehrfunktionellen Amins (a2-u), welches oligomeres MDA enthält, kann im Bereich von ungefähr 2,3 bis ungefähr 5 variieren, insbesondere von 2,3 bis 3,5 und insbesondere von 2,3 bis 3. Eine solche Mischung von MDAbasierten mehrfunktionellen Aminen mit unterschiedlichen Funktionalitäten ist insbesondere das Roh-MDA, das insbesondere bei der Kondensation von Anilin mit Formaldehyd, üblicherweise katalysiert durch Salzsäure, als Zwischenprodukt der Herstellung von Roh-MDI entsteht.

Im Rahmen der genannten bevorzugten zweiten Ausführungsform ist besonders bevorzugt, wenn die Komponente (a2) oligomeres Diaminodiphenylmethan als Verbindung (a2-u) enthält und insgesamt eine Funktionalität von mindestens 2,1 aufweist.

Der Anteil der Amine des Typs (a2-s) gemäß der allgemeinen Formel I am Gesamtgewicht aller mehrfunktionellen Amine der Komponente (a2), die somit insgesamt 100 Gew.-% ergeben, beträgt vorzugsweise von 10 bis 100 Gew.-%, insbesondere von 30 bis 100 Gew.-%, ganz besonders bevorzugt von 50 bis 100 Gew.-%, insbesondere von 80 bis 100 Gew.-%.

Der Anteil der mehrfunktionellen aromatischen Amine (a2-u), die sich von den Aminen des Typs (a2-s) unterscheiden, am Gesamtgewicht aller mehrfunktionellen Amine der Komponente (a2) beträgt vorzugsweise von 0 bis 90 Gew.-%, insbesondere von 0 bis 70 Gew.-%, besonders bevorzugt von 0 bis 50 Gew.-%, insbesondere von 0 bis 20 Gew.-%.

Im Rahmen der vorliegenden Erfindung kann das Einsatz-Verhältnis (Äquivalenzverhältnis) n^{NCO}/n^{Amin} über einen weiten Bereich variieren und insbesondere von 1,01 bis 5 betragen. Besonders bevorzugt beträgt das genannte Äquivalenzverhältnis von 1,1 bis 3, insbesondere von 1,1 bis 2. Ein Überschuss n^{NCO} gegenüber n^{Amin} führt in dieser Ausführungsform zu einer geringeren Schrumpfung des porösen Materials, insbesondere Xerogel, bei der Entfernung des Lösungsmittels sowie durch synergistische Zusammenwirkung mit dem Katalysator zu einer verbesserten Netzwerkstruktur und zu verbesserten Endeigenschaften des resultierenden porösen Materials.

Im Rahmen der vorliegenden Erfindung werden die vorgenannten Komponenten (a1) und (a2) vorzugsweise in folgendem Verhältnis eingesetzt, jeweils bezogen auf das Gesamtgewicht der Komponenten (a1) und (a2), welches 100 Gew.-% ergibt: von 20 bis 80 Gew.-%, insbesondere von 25 bis 75 Gew.-%, besonders bevorzugt von 35 bis 68 Gew.-% der Komponente (a1), von 20 bis 80 Gew.-%, insbesondere von 25 bis 75 Gew.-%, besonders bevorzugt von 32 bis 65 Gew.-% der Komponente (a2).

Die Komponenten (a1) und (a2) werden nachfolgend gemeinsam als organische Gelvorstufe (A) bezeichnet.

### Katalysator

Das erfindungsgemäße Verfahren wird vorzugsweise in Gegenwart mindestens eines Katalysators als Komponente durchgeführt.

Als Katalysatoren kommen im Prinzip alle dem Fachmann bekannten Katalysatoren in Betracht, welche die Trimerisierung von Isocyanaten (sogenannte Trimerisierungskatalysatoren) und/oder die Umsetzung von Isocyanaten mit aromatisch gebundenen Aminogruppen (sogenannte Gelkatalysatoren) beschleunigen.

Die entsprechenden Katalysatoren sind an sich bekannt und weisen unterschiedliche Ausprägungen hinsichtlich der oben genannten Reaktionen auf. Je nach Ausprägung können sie somit ein oder mehrerer der vorgenannten Typen zugeordnet werden. Dem Fachmann ist darüber hinaus bekannt, dass auch andere Reaktionen als die oben genannten auftreten können.

Entsprechende Katalysatoren lassen sich unter anderem anhand ihrer katalytischen Wirksamkeit charakterisieren, wie z.B. bekannt aus Polyurethane, 3. Auflage, G. Oertel, Hanser Verlag, München, 1993, Seite 104-110.

Bevorzugte Katalysatoren weisen eine signifikante Aktivität hinsichtlich der Trimerisierung auf. Hierdurch wird die Homogenität der Netzwerkstruktur günstig beeinflusst, woraus besonders günstige mechanische Eigenschaften resultieren.

Die Katalysatoren können ein Monomerbaustein (einbaubarer Katalysator) oder nichteinbaubar sein, wobei nicht einbaubare Katalysatoren bevorzugt sind.

Die Komponente wird zweckmäßigerweise in der geringsten wirksamen Menge eingesetzt. Vorzugsweise Anwendung finden Mengen von 0,01 bis 5 Gew.-teile, insbesondere von 0,1 bis 3 Gew.- teile, besonders bevorzugt von 0,2 bis 2,5 Gew.- teile des Katalysators oder der Katalysatoren (nachfolgend als Komponente (a4) bezeichnet) bezogen auf insgesamt 100 Gew.-teile der Komponenten (a1) und (a2).

Im Rahmen von Komponente (a4) bevorzugte Katalysatoren werden ausgewählt aus der Gruppe bestehend aus primären, sekundären und tertiären Aminen, Triazinderivaten, Organometallverbindungen, Metallchelaten, quaternäre Ammoniumsalzen, Ammoniumhydroxiden sowie Alkali- und Erdalkali-Hydroxiden, -alkoxiden und -carboxylaten.

Geeignete Katalysatoren sind insbesondere starke Basen, beispielsweise quaternäre Ammoniumhydroxide, wie z. B. Tetraalkylammoniumhydroxide mit 1 bis 4 C-Atomen im Alkylrest und Benzyltrimethylammoniumhydroxid, Alkalimetallhydroxide, wie z. B. Kalium- oder Natriumhydroxid und Alkalimetallalkoxide, wie z. B. Natriummethylat, Kalium- und Natriumethylat und Kaliumisopropylat.

Geeignete Katalysatoren sind außerdem insbesondere Alkalimetallsalze von Carbonsäuren, wie z. B. Kaliumformiat, Natrium-, Kaliumacetat, Kalium-2-ethylhexoat, Kaliumadipat und Natriumbenzoat, Alkalisalze von langkettigen Fettsäuren mit 10 bis 20 C-Atomen und gegebenenfalls seitenständigen OH-Gruppen.

Geeignete Katalysatoren sind außerdem insbesondere N-Hydroxyalkyl-quarternärammoniumcarboxylate, wie z.B. Trimethylhydroxypropylammoniumformiat.

Organometallverbindungen sind dem Fachmann insbesondere als Gelkatalysatoren an sich bekannt und sind als Katalysatoren (a4) ebenfalls geeignet. Organozinnverbindungen wie z.B. Zinn-2-ethylhexanoate und Dibutylzinndilaurate sind im Rahmen von Komponente (a4) bevorzugt.

Tertiäre Amine sind dem Fachmann als Gelkatalysatoren und als Trimerisierungskatalysatoren an sich bekannt. Tertiäre Amine sind als Katalysatoren (a4) besonders bevorzugt. Bevorzugte tertiäre Amine sind insbesondere N,N-Dimethylbenzylamin, N,N'-Dimethylpiperazin, N,N-Dimethylcyclohexylamin, N,N',N"-Tris-(dialkylaminoalkyl)-s-hexahydrotriazine, wie z. B. N,N',N"-Tris(dimethylaminopropyl)-s-hexahydrotriazin, Tris-(dimethylaminomethyl)phenol, Bis(2-dimethylaminoethyl)ether, N,N,N,N,N-Pentamethyldiethylentriamin, Methylimidazol, Dimethylbenzylamin, 1,6-Diazabicyclo-5,4,0-undecen-7, Triethylamin, Triethylendiamin (IUPAC: 1,4-Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin und Diisopropanolamin.

Im Rahmen von Komponente (a4) besonders bevorzugte Katalysatoren werden ausgewählt aus der Gruppe bestehend aus N,N-Dimethylcyclohexylamin, Bis(2-dimethylaminoethyl)ether, N,N,N,N,N-Pentamethyldiethylentriamin, Methylimidazol, Dimethylbenzylamin, 1,6-Diazabicyclo-5,4,0-undecen-7, Tris-(dimethylaminopropyl)-s-hexahydrotriazin, Triethylamin, Tris-(dimethylaminomethyl)phenol, Triethylendiamin (Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin, Diisopropanolamin, Metall-Acetylacetonate, Ammonium-Ethylhexanoate und Metallionen-Ethylhexanoate.

Die Verwendung der im Rahmen der vorliegenden Erfindung bevorzugten Katalysatoren führt zu Aerogelen und Xerogelen mit kleineren mittleren Porendurchmessern und verbesserten mechanischen Eigenschaften, insbesonders zu verbesserter Druckfestigkeit. Darüber hinaus wird durch Verwendung der Katalysatoren die Gelierungszeit verringert, d. h. die Gelierungsreaktion beschleunigt, ohne andere Eigenschaften negativ zu beeinflussen.

### Lösungsmittel

Gemäß der vorliegenden Erfindung findet die Umsetzung in Gegenwart eines Lösungsmittels statt.

Der Begriff Lösungsmittel umfasst im Rahmen der vorliegenden Erfindung flüssige Verdünnungsmittel, das heißt sowohl Lösungsmittel im engeren Sinne als auch Dispersionsmittel. Die Mischung kann insbesondere eine echte Lösung, eine kolloidale Lösung oder eine Dispersion, z.B. eine Emulsion oder Suspension, sein. Bevorzugt ist die Mischung eine echte Lösung. Das Lösungsmittel ist eine unter den Bedingungen des Schrittes (a) flüssige Verbindung, vorzugsweise ein organisches Lösungsmittel.

Als Lösungsmittel kommen prinzipiell eine organische Verbindung oder ein Gemisch aus mehreren Verbindungen in Betracht, wobei das Lösungsmittel bei den Temperatur- und Druckbedingungen, unter denen die Mischung in Schritt (a) bereitgestellt wird (kurz: Lösungsbedingungen), flüssig ist. Die Zusammensetzung des Lösungsmittels wird so gewählt, dass es in der Lage ist, die organische Gelvorstufe zu lösen oder zu dispergieren, bevorzugt zu lösen. Bevorzugte Lösungsmittel sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt der Umsetzung in Gegenwart des Lösungsmittels ist zunächst ein Gel, d. h. ein viskoelastisches chemisches Netzwerk, das durch das Lösungsmittel gequollen ist. Ein Lösungsmittel, welches ein gutes Quellmittel für das in Schritt (b) gebildete Netzwerk darstellt, führt in der Regel zu einem Netzwerk mit feinen Poren und kleinem mittleren Porendurchmesser, wohingegen ein Lösungsmittel, welches ein schlechtes Quellmittel für das aus Schritt (b) resultierende Gel darstellt, in der Regel zu einem grobporigen Netzwerk mit großem mittleren Porendurchmesser führt.

Die Wahl des Lösungsmittels beeinflusst somit die angestrebte Porengrößenverteilung und die angestrebte Porosität. Die Wahl des Lösungsmittels erfolgt im Allgemeinen zudem so, dass ein Ausfällen oder Ausflocken durch Bildung eines präzipitierten Reaktionsproduktes während oder nach Schritt (b) des erfindungsgemäßen Verfahrens weitestgehend nicht auftritt.

Bei Wahl eines geeigneten Lösungsmittels ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel kann gravimetrisch bestimmt werden, indem die Reaktionsmischung vor dem Gelpunkt über ein geeignetes Filter filtriert wird.

Als Lösungsmittel kommen die aus dem Stand der Technik bekannten Lösungsmittel für Isocyanat-basierte Polymere in Frage. Bevorzugte Lösungsmittel sind dabei solche, die ein Lösungsmittel für die Komponenten (a1) und (a2) sind, d. h. solche, die die Bestandteile der Komponenten (a1) und (a2) unter Reaktionsbedingungen weitgehend vollständig lösen. Bevorzugt ist das Lösungsmittel gegenüber Komponente (a1) inert, d. h. nicht reaktiv.

Als Lösungsmittel kommen beispielsweise Ketone, Aldehyde, Alkylalkanoate, Amide wie Formamid und N-Methylpyrollidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel in Betracht.

Dialkylether und zyklische Ether sind als Lösungsmittel ebenfalls geeignet. Bevorzugte Dialkylether sind insbesondere solche mit 2 bis 6 Kohlenstoffatomen, insbesondere Methyl-Ethylether, Diethylether, Methyl-Propylether, Methyl-Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Aldehyde und/oder Ketone sind als Lösungsmittel bevorzugt. Als Lösungsmittel geeignete Aldehyde oder Ketone sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroelindimer, 1,2,3,6-Tetrahydrobenzaldehyd, 6-Methyl-3-cyclohexenaldehyd, Cyanacetaldehyd, Glyoxynsäureethylester, Benzaldehyd, Aceton, Methylisobutylketon, Diethylketon, Methylethylketon, Methylisobutylketon, Methyl-n-butylketon, Ethylisopropylketon, 2-Acetylfuran, 2-Methoxy-4-methylpentan-2-on, Cyclohexanon und Acetophenon. Die vorgenannten Aldehyde und Ketone können auch in Form von Mischungen eingesetzt werden. Ketone und Aldehyde mit Alkylgruppen mit bis zu 3 Kohlenstoffatomen pro Substituent sind als Lösungsmittel besonders bevorzugt. Ganz besonders bevorzugt sind Ketone der allgemeinen Formel R¹(CO)R², wobei R¹ und R² unabhängig voneinander ausgewählt werden aus Alkylgruppen mit 1 bis 3 C-Atomen. In einer ersten bevorzugten Ausführungsform ist das Keton Aceton. In einer weiteren bevorzugten Ausführungsform umfasst mindestens einer der beiden Substituenten R¹ und/oder R² eine Alkylgruppe mit mindestens 2 Kohlenstoffatomen, insbesondere Methylethylketon. Durch Verwendung der vorgenannten besonders bevorzugten Ketone in Kombination mit dem erfindungsgemäßen Verfahren werden Aerogele und Xerogele mit besonders kleinem mittlerem Porendurchmesser erhalten. Ohne sich beschränken zu wollen besteht die Vorstellung, dass die Porenstruktur des entstehenden Gels aufgrund der höheren Affinität der vorgenannten besonders bevorzugten Ketone besonders feinporig ist.

In vielen Fällen ergeben sich besonders geeignete Lösungsmittel, indem man zwei oder mehrere miteinander vollständig mischbare Verbindungen, ausgewählt aus den vorgenannten Lösungsmitteln, in Form eines Gemisches einsetzt.

Um in Schritt (b) ein ausreichend stabiles Gel zu erhalten, das bei der Trocknung in Schritt (c) nicht stark schrumpft, darf der Anteil der Komponenten (a1) und (a2) am Gesamtgewicht der Komponenten (a1) und (a2) und dem Lösungsmittel, welches 100 Gew.-% ergibt, im Allgemeinen nicht weniger als 5 Gew.-% betragen. Bevorzugt beträgt der Anteil der Komponenten (a1) und (a2) am Gesamtgewicht der Komponenten (a1) und (a2) und dem Lösungsmittel, welches 100 Gew.-% ergibt, mindestens 6 Gew.-%, besonders bevorzugt mindestens 8 Gew.-%, insbesondere mindestens 10 Gew.-%.

Andererseits darf die Konzentration der Komponenten (a1) und (a2) in der bereitgestellten Mischung nicht zu hoch gewählt werden, da ansonsten kein poröses Material mit günstigen Eigenschaften erhalten wird. Im Allgemeinen beträgt der Anteil der Komponenten (a1) und (a2) am Gesamtgewicht der Komponenten (a1) und (a2) und dem Lösungsmittel, welches 100 Gew.-% ergibt, höchstens 40 Gew.-%. Bevorzugt beträgt der Anteil der Komponenten (a1) und (a2) am Gesamtgewicht der Komponenten (a1) und (a2) und dem Lösungsmittel, welches 100 Gew.-% ergibt, höchstens 35 Gew.-%, besonders bevorzugt höchstens 25 Gew.-%, insbesondere höchstens 20 Gew.-%.

Vorzugsweise beträgt der Gewichtsanteil der Komponenten (a1) und (a2) am Gesamtgewicht der Komponenten (a1) und (a2) und des Lösungsmittels, welches 100 Gew.-% ergibt, insgesamt von 8 bis 25 Gew.-%, insbesondere von 10 bis 20 Gew.-%, besonders bevorzugt von 12 bis 18 Gew.-%. Die Einhaltung der Menge der Einsatzstoffe im genannten Bereich führt zu Aerogelen und Xerogelen mit besonders günstiger Porenstruktur, geringer Wärmeleitfähigkeit und geringer Schrumpfung bei der Trocknung.

Vor der Umsetzung ist es erforderlich, die eingesetzten Komponenten zu mischen, insbesondere homogen zu vermischen. Die Geschwindigkeit des Mischens sollte groß relativ zur Geschwindigkeit der Umsetzung sein, um Mischfehler zu vermeiden. Entsprechende Mischverfahren sind dem Fachmann an sich bekannt.

### Bevorzugtes Verfahren zur Herstellung der Aerogele und Xerogele

Im Rahmen einer bevorzugten Ausführungsform umfasst das erfindungsgemäße Verfahren zumindest folgende Schritte:
(a) Bereitstellen der Komponenten (a1) und (a2), des Katalysators und des Lösungsmittels wie oben erläutert,
(b) Umsetzung der Komponenten (a1) und (a2) in Gegenwart des Lösungsmittels und des Katalysators zu einem Gel, und
(c) Trocknen des im vorigen Schritt erhaltenen Gels.

Bevorzugte Ausführungsformen der Schritte (a) bis (c) werden im Folgenden näher beschreiben.

### Schritt (a)

Erfindungsgemäß erfolgt in Schritt (a) das Bereitstellen der Komponenten (a1) und (a2) und des Lösungsmittels.

Vorzugsweise werden die Komponenten (a1) einerseits und (a2) andererseits getrennt voneinander jeweils in einer geeigneten Teilmenge des Lösungsmittels bereitgestellt. Die getrennte Bereitstellung ermöglicht die optimale Kontrolle beziehungsweise Steuerung der Gelierungsreaktion vor und während des Vermischens.

Die in Schritt (a) bereitgestellte Mischung oder Mischungen können außerdem übliche, dem Fachmann bekannte Hilfsmittel als weitere Bestandteile enthalten. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed. Hanser Publishers, München, 2001.

Der Katalysator kann grundsätzlich einer der beiden Komponenten vor deren Mischung oder auch nach deren Mischung zugegeben werden. Vorzugsweise wird der Katalysator in Gegenwart der Komponente (a2) dem Lösungsmittel zugegeben.

### Schritt (b)

Erfindungsgemäß erfolgt in Schritt (b) die Umsetzung der Komponenten (a1) und (a2) in Gegenwart des Lösungsmittels zu einem Gel. Um die Umsetzung durchzuführen, muss zunächst eine homogene Mischung der in Schritt (a) bereitgestellten Komponenten erzeugt werden.

Das Mischen der im Rahmen von Schritt (a) bereitgestellten Komponenten kann auf übliche Weise erfolgen. Bevorzugt wird dazu ein Rührer oder eine andere Mischvorrichtung eingesetzt, um eine gute und schnelle Durchmischung zu erzielen. Die zur Erzeugung der homogenen Mischung benötigte Zeitdauer sollte klein im Verhältnis zur der Zeitdauer sein, in der die Gelierungsreaktion zu der zumindest teilweisen Ausbildung eines Gels führt, um Mischfehler zu vermeiden. Die sonstigen Mischbedingungen sind in der Regel nicht kritisch, beispielsweise kann man bei 0 bis 100°C und 0,1 bis 10 bar (absolut), insbesondere z.B. bei Raumtemperatur und Atmosphärendruck, mischen. Nach erfolgter Erzeugung einer homogenen Mischung wird die Mischapparatur vorzugsweise abgeschaltet.

Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk.

Im Rahmen von Schritt (b) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht mehr gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Die Gelierung ist dem Fachmann an sich bekannt und wird beispielsweise in der WO-2009/027310 auf Seite 21, Zeile 19 bis Seite 23, Zeile 13 beschrieben, deren Inhalt hiermit in vollem Umfang einbezogen wird.

### Schritt (c)

Erfindungsgemäß wird in Schritt (c) das im vorigen Schritt erhaltene Gel getrocknet.

Grundsätzlich kommt eine Trocknung unter überkritischen Bedingungen in Betracht, vorzugsweise nach Austausch des Lösungsmittels durch CO₂ oder anderen für Zwecke der überkritischen Trocknung geeigneter Lösungsmittel. Eine derartige Trocknung ist dem Fachmann an sich bekannt. Überkritische Bedingungen kennzeichnen eine Temperatur und einen Druck, bei der die zu entfernende fluide Phase im überkritischen Zustand vorliegt. Hierdurch lässt sich die Schrumpfung des Gelkörpers beim Entfernen des Lösungsmittels reduzieren.

Es ist allerdings angesichts der einfachen Verfahrensführung bevorzugt, die erhaltenen Gele durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit zu trocknen.

Vorzugsweise erfolgt das Trocknen des erhaltenen Gels durch Überführung des Lösungsmittels in den gasförmigen Zustand bei einer Temperatur und einem Druck unterhalb der kritischen Temperatur und des kritischen Drucks des Lösungsmittels. Demzufolge erfolgt vorzugsweise das Trocknen durch Entfernung des Lösungsmittels, das bei der Umsetzung zugegen war, ohne vorherigen Austausch gegen ein weiteres Lösungsmittel.

Entsprechende Methoden sind dem Fachmann ebenfalls bekannt und werden in der WO-2009/027310 auf Seite 26, Zeile 22 bis Seite 28, Zeile 36 beschrieben, deren Inhalt hiermit in vollem Umfang einbezogen wird.

### Eigenschaften der Aerogele und Xerogele und deren Verwendung

Ein weiterer Gegenstand der vorliegenden Erfindung sind die gemäß dem erfindungsgemäßen Verfahren erhältlichen Aerogele und Xerogele.

Xerogele sind als poröse Materialien im Rahmen der vorliegenden Erfindung bevorzugt, d. h. vorzugsweise ist das erfindungsgemäß erhältliche poröse Material ein Xerogel.

Unter einem Xerogel wird im Rahmen der vorliegenden Erfindung ein poröses Material mit einer Porosität von mindestens 70 Vol.-% und einem volumengemittelten mittleren Porendurchmesser von höchstens 50 Mikrometer verstanden, welches durch ein Sol-Gel-Verfahren hergestellt wurde, wobei die flüssige Phase durch Trocknen unterhalb der kritischen Temperatur und unterhalb des kritischen Drucks der flüssigen Phase ("subkritische Bedingungen") aus dem Gel entfernt wurde.

Der mittlere Porendurchmesser wird mittels Quecksilber-Intrusionsmessung nach DIN 66133 bestimmt und ist im Rahmen der vorliegenden Erfindung grundsätzlich ein volumengewichteter Mittelwert. Die Quecksilber-Intrusionsmessung nach DIN 66133 ist eine porosimetrische Methode und wird in einem Porosimeter durchgeführt. Dabei wird Quecksilber in eine Probe des porösen Materials gepresst. Kleine Poren erfordern einen höheren Druck, um mit dem Quecksilber gefüllt zu werden als große Poren, und aus dem entsprechenden Druck/Volumen-Diagramm kann man eine Porengrößenverteilung und den volumengewichteten mittleren Porendurchmesser bestimmen.

Vorzugsweise beträgt der volumengewichtete mittlere Porendurchmesser des porösen Materials höchstens 4 Mikrometer. Besonders bevorzugt beträgt der volumengewichtete mittlere Porendurchmesser des porösen Materials höchstens 3 Mikrometer, ganz besonderes bevorzugt höchstens 2 Mikrometer und insbesondere höchstens 1 Mikrometer.

Zwar ist eine möglichst geringe Porengröße bei hoher Porosität aus Sicht einer geringen thermischen Leitfähigkeit wünschenswert. Herstellungsbedingt und um ein mechanisch ausreichend stabiles Aerogel oder Xerogel zu erhalten, ergibt sich jedoch eine praktische untere Grenze des volumengewichteten mittleren Porendurchmessers. Im Allgemeinen beträgt der volumengewichtete mittlere Porendurchmesser mindestens 100 nm, vorzugsweise mindestens 150 nm. In vielen Fällen beträgt der volumengewichtete mittlere Porendurchmesser mindestens 200 nm, insbesondere mindestens 300 nm.

Bevorzugt weist das erfindungsgemäß erhältliche Aerogel oder Xerogel eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%. Die Porosität in Vol.-% bedeutet, dass der genannte Anteil des Gesamtvolumens des Aerogels oder Xerogels aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des Aerogels oder Xerogels nach oben begrenzt.

Die Komponenten (a1) und (a2) liegen im erfindungsgemäß erhältlichen Aerogel oder Xerogel in umgesetzter (polymerer) Form vor. Aufgrund der erfindungsgemäßen Zusammensetzung liegen die Monomerbausteine (a1) und (a2) im porösen Material überwiegend über Harnstoffverknüpfungen und/oder über Isocyanuratverknüpfungen gebunden vor, wobei die Isocyanuratgruppen durch Trimerisierung von Isocyanatgruppen der Monomerbausteine (a1) entstehen. Sofern das poröse Material weitere Komponenten enthält, sind weitere mögliche Verknüpfungen beispielsweise Urethangruppen, welche durch Reaktion von Isocyanatgruppen mit Alkoholen oder Phenolen entstehen.

Bevorzugt liegen die Komponenten (a1) und (a2) im porösen Material zu mindestens 50 mol-% durch Harnstoffgruppen -NH-CO-NH- und/oder über Isocyanuratverknüpfungen verknüpft vor. Vorzugsweise liegen die Komponenten (a1) und (a2) im porösen Material von 50 bis 100 mol-% durch Harnstoffgruppen und/oder über Isocyanuratverknüpfungen verknüpft vor, insbesondere von 60 bis 100 mol-%, ganz besonders bevorzugt von 70 bis 100 mol-%, insbesondere 80 bis 100 mol-%, beispielsweise von 90 bis 100 mol-%.

Die zu 100 mol-% fehlenden mol-% liegen als weitere Verknüpfungen vor, wobei solche weitere Verknüpfungen dem Fachmann aus dem Gebiet der Isocyanat-Polymere an sich bekannt sind. Beispielhaft genannt seien Ester-, Harnstoff-, Biuret-, Allophanat-, Carbodiimid-, Isocyanurat-, Uretdion- und/oder Urethangruppen.

Die Bestimmung der mol-% der Verknüpfungen der Monomerbausteine im porösen Material erfolgt mittels NMR-Spektroskopie (Kernspinresonanz) im Festkörper oder in gequollenem Zustand. Geeignete Bestimmungsmethoden sind dem Fachmann bekannt.

Die Dichte des erfindungsgemäß erhältlichen porösen Materials beträgt üblicherweise 20 bis 600 g/l, bevorzugt 50 bis 500 g/l und besonders bevorzugt 70 bis 200 g/l.

Das erfindungsgemäße Verfahren ergibt ein zusammenhängendes poröses Material und nicht nur ein Polymerpulver oder -partikel. Dabei wird die räumliche Form des resultierenden porösen Materials durch die Form des Gels bestimmt, die wiederum durch die Form der Geliervorrichtung bestimmt wird. So ergibt beispielsweise ein zylindrischer Gelierbehälter üblicherweise ein annähernd zylinderförmiges Gel, dass dann zu einem porösen Material in Zylinderform getrocknet werden kann. Grundsätzlich ist es jedoch auch möglich, ein Pulver herzustellen, beispielsweise durch Zermahlen des porösen Materials.

Die erfindungsgemäßen erhältlichen Aerogele und Xerogele weisen eine geringe Wärmeleitfähigkeit, eine hohe Porosität und eine geringe Dichte bei gleichzeitig hoher mechanischer Stabilität auf. Die porösen Materialien weisen zudem eine geringe mittlere Porengröße auf. Die Kombination der vorgenannten Eigenschaften erlaubt den Einsatz als Dämmstoff im Bereich der thermischen Isolation, insbesondere für Anwendungen im Vakuumbereich, wo eine möglichst geringe Dicke von Vakuumplatten bevorzugt ist, beispielsweise in Kühlgeraten oder in Gebäuden. So ist die Verwendung in Vakuumisolationspaneelen, insbesondere als Kernmaterial für Vakuumisolationspaneelen, bevorzugt. Bevorzugt ist außerdem die Verwendung der erfindungsgemäßen Aerogele und Xerogele als Dämmstoff.

Darüber hinaus werden durch die geringe thermische Leitfähigkeit der erfindungsgemäß erhältlichen Aerogele und Xerogele Anwendungen bei Drücken von 1 bis 100 mbar und insbesondere von 10 mbar bis 100 mbar möglich. Das Eigenschaftsprofil der erfindungsgemäß erhältlichen Aerogele und Xerogele eröffnet insbesondere Anwendungen, bei denen eine lange Lebensdauer der Vakuumpanele gewünscht wird und die auch bei einer Druckzunahme von ungefähr 2 mbar pro Jahr noch nach vielen Jahren, beispielsweise bei einem Druck von 100 mbar, eine niedrige Wärmeleitfähigkeit aufweisen. Die erfindungsgemäß erhältlichen Aerogele und Xerogele weisen günstige thermische Eigenschaften einerseits und günstige Materialeigenschaften wie einfache Verarbeitbarkeit und hohe mechanische Stabilität, beispielsweise geringe Brüchigkeit, andererseits auf.

### Beispiele

Die Dichte p des porösen Gels in der Einheit g/ml wurde gemäß der Formel p = m / (π*r²)*h berechnet, wobei m die Masse des porösen Gels, r der Radius (halber Durchmesser) des porösen Gels und h die Höhe porösen Gels ist.

Die Porosität in der Einheit Vol.-% wurde gemäß der Formel P = (Vᵢ / (Vᵢ + Vₛ)) * 100 Vol.-% berechnet, wobei P die Porosität, Vᵢ das spezifische Volumen des porösen Gels in ml/g ist und berechnet wird gemäß Vᵢ = 1 / ρ. Vₛ ist das spezifische Volumen in ml/g des Probenkörpers. Als spezifisches Volumen wurde der Wert 1 / Vₛ = 1,38 g/ml verwendet. Dieser Wert lässt sich durch He-Pyknometrie bestimmen.

Der mittlere Porendurchmesser wurde mittels Quecksilber-Intrusionsmessung nach DIN 66133 bestimmt und ist ein volumengewichteter Mittelwert.

Der Lamda-Wert wurde durch die dynamische Heizdrahtmethode bestimmt. Dabei wird ein Draht in die Probe eingebettet, der gleichzeitig als Heizelement und Temperatursensor dient. Der Draht wird mit einer konstanten elektrischen Leistung beheizt. Weitere Details zu dieser Messmethode finden sich z.B. in H.-P. Ebert et al., High Temp. - High Press., 1993, 25, 391-402.

Es wurden folgende Verbindungen eingesetzt:
Komponente a1:
   Oligomeres MDI (Lupranat® M200) mit einem NCO-Gehalt von 30,9 g pro 100 g nach ASTM D-5155-96 A, einer Funktionalität im Bereich von drei und einer Viskosität von 2100 mPa.s bei 25°C nach DIN 53018 (nachfolgend "Verbindung M200").
   Oligomeres MDI (Lupranat® M20) mit einem NCO-Gehalt von 31,5 g pro 100 g nach ASTM D-5155-96 A, einer Funktionalität im Bereich von drei und einer Viskosität von 210 mPa.s bei 25°C nach DIN 53018 (nachfolgend "Verbindung M20").
Komponente a2:
   3,3',5,5'-Tetraethyl-4,4'-diaminodiphenylmethan (nachfolgend "MDEA") 3,3',5,5'-Tetramethyl-4,4'-diaminodiphenylmethan (nachfolgend "MDMA") 4,4'-Diaminodiphenylmethan (nachfolgend "MDA")
Katalysatoren:
   Lupragen® N600, N,N',N"-Tris(dimethylaminopropyl)-s-hexahydrotriazin (nachfolgend "Verbindung N600")

### Beispiel 1

1,8 g der Verbindung M200 wurden unter Rühren bei 20°C in 10,5 g Aceton in einem Becherglas gelöst. 1,6 g MDEA (a2-1) und 0,1 g Verbindung N600 wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte eine bimodale Porengrößenverteilung mit Porendurchmessern im Bereich von 0,4 µm und 2 µm. Die Porosität betrug 83 Vol.-% mit einer entsprechenden Dichte von 185 g/l.

### Beispiel 2

1,8 g der Verbindung M200 wurden unter Rühren bei 20°C in 10,5 g Aceton in einem Becherglas gelöst. 1,6 g M DEA (a2-1) und 0,2 g der Verbindung N600 wurden in 10,8 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte eine bimodale Porengrößenverteilung mit Porendurchmessern im Bereich von 0,3 µm und 2 µm. Die Porosität betrug 83 Vol.-% mit einer entsprechenden Dichte von 190 g/l.

### Beispiel V3:

1,6 g der Verbindung M200 wurden unter Rühren bei 20°C in 10,5 g Aceton in einem Becherglas gelöst. 1,6 g MDEA wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte einen durchschnittlichen Porendurchmesser von 4 µm. Die Porosität betrug 89 Vol.-% mit einer entsprechenden Dichte von 135 g/l.

### Beispiel V4:

1,9 g der Verbindung M200 wurden unter Rühren bei 20°C in 10,5 g Aceton in einem Becherglas gelöst. 1,3 g M DA wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte einen durchschnittlichen Porendurchmesser von 2,9 µm. Die Porosität betrug 87 Vol.-% mit einer entsprechenden Dichte von 170 g/l.

### Beispiel 5

1,8 g der Verbindung M20 wurden unter Rühren bei 20°C in 12 g Ethyl acetat in einem Becherglas gelöst. 1,6 g MDMA (a2-2) und 0,1g Verbindung N600 wurden in 12,5 g Ethyl acetat in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde der Gel-Monolith aus dem Becherglas genommen und in einem Autoklaven durch Lösungsmittel-Extraktion mit überkritischem CO₂ getrocknet (nachfolgend beschrieben).

Lösungsmittel Extraktion mit überkritischem CO₂: Der Gel-Monolith wurde in einen 250 ml fassenden Autoklaven transferiert. Der Autoklav wurde mit >99% Aceton gefüllt, so dass der Gel-Monolith vollständig von Aceton bedeckt war, und anschließend verschlossen. Der Monolith wurde für 24 Stunden im CO₂ Strom getrocknet. Der Druck (im Trocknungsystem) betrug zwischen 115 und 120 bar; die Temperatur betrug 40°C. Am Ende wurde der Druck im System innerhalb von ca. 45 Minuten bei einer Temperatur von 40°C kontrolliert auf Atmosphärendruck verringert. Der Autoklav wurde geöffnet und das erhaltene poröse Material wurde entnommen.

Das erhaltene poröse Material hatte eine Dichte von 136 g/l. Der Lambda-Wert betrug 19,8 mW/m*K (Druck 1 bar).

## Patentansprüche

1. Verfahren zur Herstellung eines Aerogels oder Xerogels umfassend die Umsetzung der folgenden Komponenten (a1) und (a2) in Gegenwart eines Lösungsmittels und mindestens eines Katalysators, wobei die Umsetzung in Abwesenheit von Wasser durchgeführt wird:
(a1) mindestens ein mehrfunktionelles Isocyanat, und
(a2) mindestens ein mehrfunktionelles substituiertes aromatisches Amin (a2-s) gemäß der allgemeinen Formel I 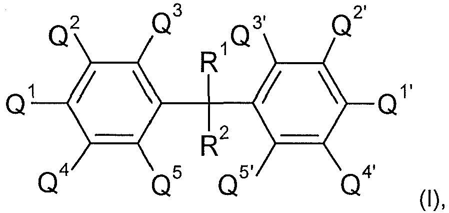 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass
- die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist und
- Q², Q⁴, Q^{2'} und Q^{4'} so gewählt werden, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist,
und optional mindestens ein weiteres mehrfunktionelles aromatisches Amin (a2-u), welches sich von den Aminen (a2-s) gemäß der allgemeinen Formel I unterscheidet.

2. Verfahren nach Anspruch 1, wobei Q², Q⁴, Q^{2'} und Q^{4'} so gewählt werden, dass das substituierte aromatische Amin (a2-s) mindestens zwei primäre Aminogruppen umfasst, die jeweils eine lineare oder verzweigte Alkylgruppe mit von 1 bis 12 Kohlenstoffatomen in α-Position aufweisen, die weitere funktionelle Gruppen tragen kann.

3. Verfahren nach Anspruch 1 oder 2, wobei die Aminkomponente (a2) mindestens eine Verbindung (a2-s) umfasst, die aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan ausgewählt wird, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, wobei die Alkylgruppen weitere funktionelle Gruppen tragen können.

4. Verfahren nach einem oder mehreren der Ansprüche 1 bis 3, wobei die Alkylgruppen der mehrfunktionellen aromatischen Amine (a2-s) gemäß der allgemeinen Formel I ausgewählt werden aus Methyl, Ethyl, n-Propyl, iso-Propyl, n-Butyl, sek-Butyl und tert-Butyl.

5. Verfahren nach einem oder mehreren der Ansprüchen 1 bis 4, wobei die mehrfunktionellen aromatischen Amine (a2-s) gemäß der allgemeinen Formel I 3,3',5,5'-Tetraalkyl-4,4'-diaminodiphenylmethane sind, vorzugsweise 3,3',5,5'-Tetraethyl-4,4'-diaminodiphenylmethan und/oder 3,3',5,5'-Tetramethyl-4,4'-diaminodiphenylmethan.

6. Verfahren nach einem oder mehreren der Ansprüche 1 bis 5, wobei die eingesetzte Menge der Komponente (a1) von 20 bis 80 Gew.-% und die der Komponente (a2) von 20 bis 80 Gew.-% beträgt, jeweils bezogen auf das Gesamtgewicht der Komponenten (a1) und (a2), welches 100 Gew.-% ergibt.

7. Verfahren nach einem oder mehreren der Ansprüche 1 bis 6, wobei die eingesetzte Menge der Komponente (a1) von 35 bis 68 Gew.-% und die der Komponente (a2) von 32 bis 65 Gew.-% beträgt, jeweils bezogen auf das Gesamtgewicht der Komponenten (a1) und (a2), welches 100 Gew.-% ergibt.

8. Verfahren nach einem oder mehreren der Ansprüche 1 bis 7, wobei Komponente (a2) ausschließlich aus Verbindungen des Typs (a2-s) gemäß der allgemeinen Formel I besteht.

9. Verfahren nach einem oder mehreren der Ansprüche 1 bis 8, wobei die Umsetzung in Gegenwart mindestens eines tertiären Amins als Katalysator durchgeführt wird.

10. Verfahren nach einem oder mehreren der Ansprüche 1 bis 9, umfassend:
(a) Bereitstellen der Komponenten (a1) und (a2), des Katalysators und des Lösungsmittels wie in den Ansprüchen 1 bis 8 definiert,
(b) Umsetzung der Komponenten (a1) und (a2) in Gegenwart des Lösungsmittels und des Katalysators zu einem Gel, und
(c) Trocknen des im vorigen Schritt erhaltenen Gels.

11. Verfahren nach Anspruch 10, wobei die Komponenten (a1) einerseits und (a2) andererseits getrennt voneinander jeweils in einer Teilmenge des Lösungsmittels bereitgestellt werden.

12. Verfahren nach Anspruch 10 oder 11, wobei das Trocknen des erhaltenen Gels durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit erfolgt.

13. Verfahren nach Anspruch 10 oder 11, wobei das Trocknen des erhaltenen Gels unter überkritischen Bedingungen erfolgt.

## Claims

1. A process for producing an aerogel or xerogel, which comprises reacting the following components (a1) and (a2) in the presence of a solvent and of at least one catalyst, with the reaction being carried out in the absence of water:
(a1) at least one polyfunctional isocyanate, and
(a2)at least one polyfunctional substituted aromatic amine (a2-s) having the general formula I 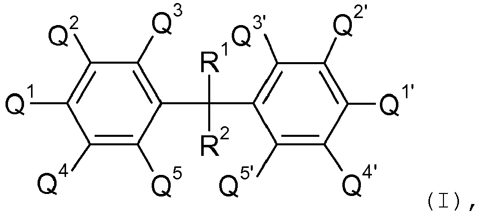 where R¹ and R² can be identical or different and are each selected independently from among hydrogen and linear or branched alkyl groups having from 1 to 6 carbon atoms and all substituents Q¹ to Q⁵ and Q^{1'} to Q^{5'} are identical or different and are each selected independently from among hydrogen, a primary amino group and a linear or branched alkyl group having from 1 to 12 carbon atoms, where the alkyl group can bear further functional groups, with the proviso that
- the compound having the general formula I comprises at least two primary amino groups, where at least one of Q¹, Q³ and Q⁵ is a primary amino group and at least one of Q^{1'}, Q^{3'} and Q^{5'} is a primary amino group, and
- Q², Q⁴, Q^{2'} and Q^{4'} are selected so that the compound having the general formula I has at least one linear or branched alkyl group, which can bear further functional groups, having from 1 to 12 carbon atoms in the α position relative to at least one primary amino group bound to the aromatic ring, and
optionally at least one further polyfunctional aromatic amine (a2-u) which differs from the amines (a2-s) having the general formula I.

2. The process according to claim 1, wherein Q², Q⁴, Q^{2'} and Q^{4'} are selected so that the substituted aromatic amine (a2-s) comprises at least two primary amino groups which each have a linear or branched alkyl group having from 1 to 12 carbon atoms, which can bear further functional groups, in the α position.

3. The process according to claim 1 or 2, wherein the amine component (a2) comprises at least one compound (a2-s) selected from the group consisting of 3,3',5,5'-tetraalkyl-4,4'-diaminodiphenylmethane, 3,3',5,5'-tetraalkyl-2,2'-diaminodiphenylmethane and 3,3',5,5'-tetraalkyl-2,4'-diaminodiphenylmethane, where the alkyl groups in the 3,3',5 and 5' positions can be identical or different and are selected independently from among linear or branched alkyl groups which have from 1 to 12 carbon atoms and can bear further functional groups.

4. The process according to one or more of claims 1 to 3, wherein the alkyl groups of the polyfunctional aromatic amines (a2-s) having the general formula I are selected from among methyl, ethyl, n-propyl, isopropyl, n-butyl, sec-butyl and tert-butyl.

5. The process according to one or more of claims 1 to 4, wherein the polyfunctional aromatic amines (a2-s) having the general formula 1 are 3,3',5,5'-tetraalkyl-4,4'-diaminodiphenylmethanes, preferably 3,3',5,5'-tetraethyl-4,4'-diaminodiphenylmethane and/or 3,3',5,5'-tetramethyl-4,4'-diaminodiphenylmethane.

6. The process according to one or more of claims 1 to 5, wherein the amount of component (a1) used is from 20 to 80% by weight and that of component (a2) is from 20 to 80% by weight, in each case based on the total weight of the components (a1) and (a2), which is 100% by weight.

7. The process according to one or more of claims 1 to 6, wherein the amount of component (a1) used is from 35 to 68% by weight and that of the component (a2) is from 32 to 65% by weight, in each case based on the total weight of the components (a1) and (a2), which is 100% by weight.

8. The process according to one or more of claims 1 to 7, wherein component (a2) consists exclusively of compounds of the type (a2-s) having the general formula 1.

9. The process according to one or more of claims 1 to 8, wherein the reaction is carried out in the presence of at least one tertiary amine as catalyst.

10. The process according to one or more of claims 1 to 9, which comprises:
a) provision of the components (a1) and (a2), the catalyst and the solvent defined in claims 1 to 8,
b) reaction of the components (a1) and (a2) in the presence of the solvent and the catalyst to form a gel and
c) drying of the gel obtained in the preceding step.

11. The process according to claim 10, wherein the components (a1) and (a2) are provided separately, in each case in a partial amount of the solvent.

12. The process according to claim 10 or 11, wherein the drying of the gel obtained is carried out by converting the liquid comprised in the gel into the gaseous state at a temperature and a pressure below the critical temperature and the critical pressure of the liquid comprised in the gel.

13. The process according to claim 10 or 11, wherein the drying of the gel obtained is carried out under supercritical conditions.

## Revendications

1. Procédé de fabrication d'un aérogel ou d'un xérogel comprenant la mise en réaction des composants (a1) et (a2) suivants en présence d'un solvant et d'au moins un catalyseur, la réaction étant réalisée en l'absence d'eau :
(a1) au moins un isocyanate polyfonctionnel et
(a2) au moins une amine aromatique substituée polyfonctionnelle (a2-s) de formule générale I 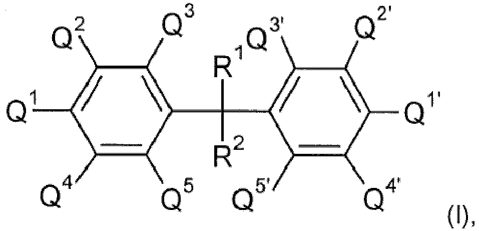 dans laquelle R¹ et R² peuvent être identiques ou différents, et sont choisis indépendamment l'un de l'autre parmi l'hydrogène et les groupes alkyle linéaires ou ramifiés de 1 à 6 atomes de carbone, et dans laquelle tous les substituants Q¹ à Q⁵ et Q^{1'} à Q^{5'} sont identiques ou différents, et sont choisis indépendamment les uns des autres parmi l'hydrogène, un groupe amino primaire et un groupe alkyle linéaire ou ramifié de 1 à 12 atomes de carbone, le groupe alkyle pouvant porter d'autres groupes fonctionnels, à condition que
- le composé de formule générale I comprenne au moins deux groupes amino primaires, au moins substituant parmi Q¹, Q³ et Q⁵ étant un groupe amino primaire et au moins un substituant parmi Q^{1'}, Q^{3'} et Q^{5'} étant un groupe amino primaire, et
- Q², Q⁴, Q^{2'} et Q^{4'} soient choisis de sorte que le composé de formule générale I comprenne au moins un groupe alkyle linéaire ou ramifié, qui peut porter des groupes fonctionnels supplémentaires, de 1 à 12 atomes de carbone en position α par rapport à au moins un groupe amino primaire relié au noyau aromatique,
et éventuellement au moins une autre amine aromatique polyfonctionnelle (a2-u), qui est différente des amines (a2-s) de formule générale I.

2. Procédé selon la revendication 1, dans lequel Q², Q⁴, Q^{2'} et Q^{4'} sont choisis de sorte que l'amine aromatique substituée (a2-s) comprenne au moins deux groupes amino primaires, qui comprennent chacun un groupe alkyle linéaire ou ramifié de 1 à 12 atomes de carbone en position α, qui peut porter des groupes fonctionnels supplémentaires.

3. Procédé selon la revendication 1 ou 2, dans lequel le composant amine (a2) comprend au moins un composé (a2-s), qui est choisi dans le groupe constitué par le 3,3',5,5'-tétraalkyl-4,4'-diaminodiphénylméthane, le 3,3',5,5'-tétraalkyl-2,2'-diaminodiphénylméthane et le 3,3',5,5'-tétraalkyl-2,4'-diaminodiphénylméthane, les groupes alkyle en position 3, 3', 5 et 5' pouvant être identiques ou différents et étant choisis indépendamment les uns des autres parmi les groupes alkyle linéaires ou ramifiés de 1 à 12 atomes de carbone, les groupes alkyle pouvant porter des groupes fonctionnels supplémentaires.

4. Procédé selon une ou plusieurs des revendications 1 à 3, dans lequel les groupes alkyle des amines aromatiques polyfonctionnelles (a2-s) de formule générale I sont choisis parmi méthyle, éthyle, n-propyle, iso-propyle, n-butyle, sec-butyle et tert-butyle.

5. Procédé selon une ou plusieurs des revendications 1 à 4, dans lequel les amines aromatiques polyfonctionnelles (a2-s) de formule générale I sont des 3,3',5,5'-tétraalkyl-4,4'-diaminodiphénylméthanes, de préférence le 3,3',5,5'-tétraéthyl-4,4'-diaminodiphénylméthane et/ou le 3,3',5,5'-tétraméthyl-4,4'-diaminodiphénylméthane.

6. Procédé selon une ou plusieurs des revendications 1 à 5, dans lequel la quantité utilisée du composant (a1) est de 20 à 80 % en poids et celle du composant (a2) est de 20 à 80 % en poids, à chaque fois par rapport au poids total des composants (a1) et (a2), qui est de 100 % en poids.

7. Procédé selon une ou plusieurs des revendications 1 à 6, dans lequel la quantité utilisée du composant (a1) est de 35 à 68 % en poids et celle du composant (a2) est de 32 à 65 % en poids, à chaque fois par rapport au poids total des composants (a1) et (a2), qui est de 100 % en poids.

8. Procédé selon une ou plusieurs des revendications 1 à 7, dans lequel le composant (a2) est exclusivement constitué de composés de type (a2-s) de formule générale I.

9. Procédé selon une ou plusieurs des revendications 1 à 8, dans lequel la réaction est réalisée en présence d'au moins une amine tertiaire en tant que catalyseur.

10. Procédé selon une ou plusieurs des revendications 1 à 9, comprenant :
(a) la préparation des composants (a1) et (a2), du catalyseur et du solvant tels que définis dans les revendications 1 à 8,
(b) la mise en réaction des composants (a1) et (a2) en présence du solvant et du catalyseur pour former un gel, et
(c) le séchage du gel obtenu à l'étape précédente.

11. Procédé selon la revendication 10, dans lequel les composants (a1) d'une part et (a2) d'autre part sont préparés séparément l'un de l'autre, chacun dans une quantité partielle du solvant.

12. Procédé selon la revendication 10 ou 11, dans lequel le séchage du gel obtenu a lieu par transfert du liquide contenu dans le gel à l'état gazeux à une température et une pression inférieures à la température critique et à la pression critique du liquide contenu dans le gel.

13. Procédé selon la revendication 10 ou 11, dans lequel le séchage du gel obtenu a lieu dans des conditions supercritiques.
